# EUROPÄISCHE PATENTSCHRIFT

(11) **EP 1 529 222 B1**
(45) Veröffentlichungstag und Bekanntmachung des Hinweises auf die Patenterteilung: **15.09.2010**
(21) Anmeldenummer: 03815795.4
(22) Anmeldetag: 13.08.2003
(51) Int. Cl.: G01S 5/02, G01S 11/06

(54) **EINRICHTUNG UND VERFAHREN ZUR POSITIONSBESTIMMUNG EINES TRANSPONDERS**
DEVICE AND METHOD FOR DETERMINING THE POSITION OF A TRANSPONDER
DISPOSITIF ET PROCEDE POUR DETERMINER LA POSITION D'UN TRANSPONDEUR

(30) Priorität: 16.08.2002 DE 10237605
(43) Veröffentlichungstag der Anmeldung: 11.05.2005
(73) Patentinhaber: Leopold Kostal GmbH & Co. KG, 58507 Lüdenscheid (DE)
(72) Erfinder: DEGENER, Martin, 44795 Bochum (DE); TRABERT, Jörg, 44287 Dortmund (DE); RICKHOFF, Dieter, 59387 Ascheberg (DE); WUSTLICH, André, 59494 Soest (DE)
(86) Internationale Anmeldenummer: PCT/EP2003/008980
(87) Internationale Veröffentlichungsnummer: WO 2004/077087

(56) Entgegenhaltungen:
- DE-A- 10 032 936
- DE-C- 19 802 532

## Beschreibung

Die vorliegende Erfindung betrifft das Gebiet der Positionsbestimmung eines Transponders. Insbesondere betrifft die Erfindung eine Einrichtung zur Positionsbestimmung eines mobilen Transponders, mit einem ortsfesten, zumindest zwei zur Abstrahlung jeweils eines Sendesignals vorgebbarer Stärke mittels dazu geeigneter Antennen vorgesehene Sender sowie eine Steuer- und Auswerteelektronikeinheit mit Mitteln zum wechselweisen Betrieb der Sender umfassenden Basissystem, und einem zur Kommunikation mit dem Basissystem vorgesehenen, mit Mitteln zur Erfassung eines Feldstärkedifferenzsignals versehen Transponder. Außerdem betrifft die Erfindung ein Verfahren zur Positionsbestimmung eines mobilen Transponders mit einem ortsfesten, zumindest zwei zur Abstrahlung jeweils eines Sendesignals vorgebbarer Stärke mittels dazu geeigneter Antennen vorgesehene Sender umfassenden Basissystem, wobei die Sendesignale von dem Transponder empfangen und in einer Feldstärkedifferenzsignal-Erfassungseinrichtung ausgewertet werden.

Eingesetzt werden solche Einrichtungen bzw. Verfahren z.B. bei sog. Zugangsberechtigungskontrollsystemen insbesondere für Türen im Gebäudebereich, um festzustellen, ob ein sich einer Türe nähernder, als Ausweis für die Berechtigung zum Zutritt zu einem bestimmten Bereich, welcher durch die Türe von einem anderen Bereich getrennt ist, dienender Transponder der Türe von der einen oder anderen Seite nähert. Durch derartig ausgerüstete Türen werden meist Gebäudebereiche mit unterschiedlichen Zugangsberechtigungsstufen getrennt, d.h. im einfachsten Falle wird z.B. der Zutritt zu dem Gebäude insgesamt von außen geregelt. In diesem Falle ist der Türschließmechanismus meist so ausgelegt, daß die Türe von innen ohne weiteres z.B. durch Betätigung eines Tür-Drückers oder Knaufs geöffnet werden kann, während dies von der Außenseite nur dann möglich ist, wenn die Zutritt begehrende Person einen entsprechenden Berechtigungsnachweis beispielsweise in Form eines eine codierte Information beinhaltenden Transponders mit sich führt. Bei einer solchen Ausführung ist es jedoch erforderlich, dass erkannt wird, von welcher Seite sich ein solcher Transponder der Türe nähert, damit nicht bei einer Annäherung einer zutrittsberechtigten Person von der Innenseite eine unbeabsichtigte Entriegelung der Tür erfolgt, und somit ein Zugang von außen auch für nichtberechtigte Personen geschaffen ist.

Bekannte Einrichtungen und Verfahren zur Positionsbestimmung eines Transponders insbesondere durch niederfrequente elektromagnetische Felder, d.h. also Systeme, bei denen eine Basis-Station mit Hilfe von Feldstärkeänderungen (in der Regel On-Off-Keying) zu einem mobilen Transponder hin kommuniziert, welcher wiederum durch induktive Lastmodulation des Basis-Signals zurückkommuniziert, weshalb diese Systeme auch als magnetisch gekoppelte Transpondersysteme bezeichnet werden, beruhen auf einem Prinzip, welches mittels zumindest zweier Sender arbeitet. Die zwei Sender befinden sich dabei in relativ großem Abstand zueinander (Abstand nicht wesentlich kleiner als die Größenordnung der Reichweite) und senden abwechselnd (oder gleichzeitig) ihr Signal aus. Kann der Transponder nur das Signal des ersten Senders empfangen, so befindet er sich auf der Seite dieses Senders, empfängt er nur das Signal des zweiten Senders, so befindet er sich auf dessen Seite. Kann er beide empfangen, so befindet er sich in der Mitte der beiden Sender. Variiert man nun die Sendestärke der beiden Sender, so kann die Position im Raum bestimmt werden. Sendet z.B. der erste Sender stärker und der zweite schwächer, so verschiebt sich die Zone des beiderseitigen Empfangs hin zur Seite des zweiten Senders. Abgesehen davon, dass eine Position des Transponders außerhalb der Verbindungslinie der beiden Sender hierbei nur sehr ungenau bestimmt werden kann, hat diese bekannte Vorgehensweise noch weitere erhebliche Nachteile. So müssen beispielsweise für jede einzelne Positionsbestimmung mehrere Sendevorgänge mit verschiedenen Feldstärken durchgeführt und jeweils die Rückantwort des Transponders abgewartet werden. Je genauer die Positionsbestimmung durchgeführt werden soll, desto mehr Sendevorgänge sind notwendig, was das Verfahren zeitaufwendig macht. Außerdem müssen die Antennen in relativ großer Entfernung zueinander aufgestellt und relativ zueinander ausgerichtet sein bzw. nach der Installation vermessen werden; bei einer Sende-Reichweite von ca. 2 Metern zu beiden Seiten eines Bezugspunktes müssen die Antennen mindestens etwa 0,5 Meter auseinander stehen, um ein befriedigendes Ergebnis zu erzielen. Damit die Positionsentfernung korrekt ist, müssen die beiden Sender einen definierten, gleichbleibenden Signalpegel erzeugen, was bei den zur Realisierung solcher Systeme eingesetzten Schwingkreisen mit typischen Güten zwischen 20-60 wegen der möglichen Verstimmung etwa durch Temperaturdrift einen erhöhten Aufwand erforderlich macht.

Die DE 100 32 936 A1 offenbart eine Einrichtung gemäß dem Oberbegriff des Patentanspruchs 1. Bei dieser zum Steuern einer Zugangsberechtigung und/oder einer elektronischen Wegfahrsperre für ein Kraftfahrzeug vorgesehenen Einrichtung sind zwei Antennen auf den einander gegenüberliegenden Seiten des Kraftfahrzeugs, und damit in einem Abstand von etwa einem Meter zueinander angeordnet. Durch diesen großen Abstand ist bei in etwa gleich großer von den jeweiligen Antennen abgestrahlter Signalstärke ein deutlicher Unterschied der empfangenen Feldstärke am Ort des Transponders festzustellen. Zur Unterscheidung der beiden Antennen durch den Transponder wird den Sendesignalen eine charakteristische Kennung hinzugefügt, die im Transponder zusätzlich ausgewertet werden muss. Aufgrund des erforderlichen, relativ großen Abstandes der Antennen zueinander eignet sich diese Einrichtung nicht zum Einsatz bei den eingangs beschriebenen Zugangsberechtigungskontrollsystemen für Türen im Gebäudebereich, um festzustellen, ob ein sich einer Türe nähernder, als Ausweis für die Berechtigung zum Zutritt zu einem bestimmten Bereich, welcher durch die Türe von einem anderen Bereich getrennt ist, dienender Transponder der Türe von der einen oder anderen Seite nähert.

Aufgabe der vorliegenden Erfindung ist es deshalb, eine Einrichtung zu schaffen sowie ein Verfahren anzugeben, welche die geschilderten Nachteile des Standes der Technik überwinden und sich zudem für den Einsatz im Gebäudebereich besonders eignen.

Dies gelingt der erfindungsgemäßen Einrichtung dadurch, dass die Antennen der Sender als Luftspulen mit etwa gleich großen Antennenflächen ausgebildet sind, die mit ihren Spulenflächen parallel zueinander ausgerichtet angeordnet sind, wobei ihr Abstand zueinander größer als der Spulenradius und geringer als der Spulendurchmesser ist.

Die verfahrensbezogene Aufgabe wird dadurch gelöst, dass die Sender wechselweise jeweils ein- und ausgeschaltet werden, um über ihre Antennen jeweils ein Signal gleicher Stärke am jeweiligen Antennenort abzustrahlen, wobei in festgelegten Zeitabständen eine Sendepause erfolgt, nach der stets mit der Aussendung des Signals eines festgelegten der beiden Sender begonnen wird.

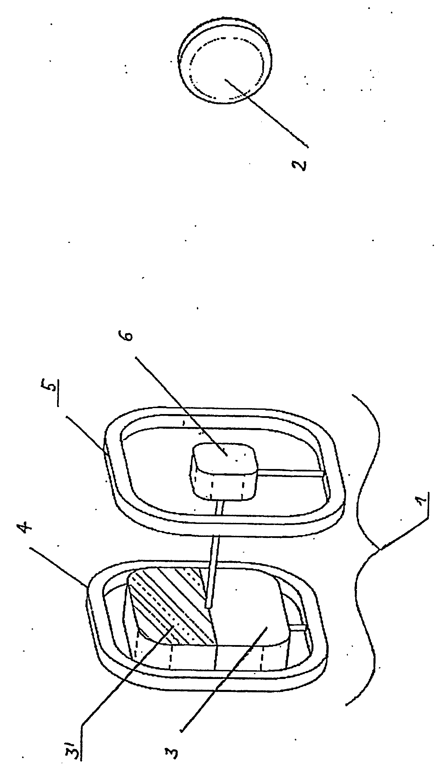

Weitere vorteilhafte Ausgestaltungen des erfindungsgemäßen Gegenstandes sind in den weiteren Unteransprüchen angegeben und werden anhand des in der Zeichnung dargestellten Ausführungsbeispiels näher erläutert.

Zwei in einer Steuer- und Auswerteelektronikeinheit 3 vorhandene Sender sind jeweils mit einer Antenne 4 bzw. 5 zur Abstrahlung eines Signals verbunden. Die Antennen 4 und 5 sind als Luftspulen ausgebildet und weisen gleich große Antennenflächen auf, so dass sie eine etwa gleich große Induktivität besitzen. Die Antennen 4 und 5 sind in geringer Entfernung und mit ihren Spulenflächen parallel zueinander ausgerichtet angeordnet und senden abwechselnd ein an ihrem jeweiligen Ort jeweils gleich starkes Signal aus. Da mit der Entfernung von der jeweiligen Antenne die Signalfeldstärke abnimmt und die Antennen eine (wenn auch geringe) Distanz zueinander aufweisen, kommt ein Gesamt-Signal zustande, dessen relative Feldstärke im Rhythmus des Wechsels der Sender oszilliert. Besonders im Nahfeld der elektromagnetischen Welle (Entfernung zur Antenne < λ/8) kommt es zu einer deutlich messbaren Modulation, da hier die Feldstärke mit 60dB pro Dekade Entfernung abnimmt. Damit eine Identifizierung möglich ist, ob das jeweilige Signal von Antenne 4 oder Antenne 5 herrührt, wird in definierten Abständen eine Sendepause durchgeführt (kein Signal) und nach dieser Pause stets mit dem Signal des der Antenne 4 zugeordneten Senders angefangen.

Der Transponder 2 ist mit Mitteln zur Erfassung eines Feldstärkedifferenzsignals versehen. Er erkennt die Sendepause und detektiert anschließend nacheinander das Signal der Antenne 4, gefolgt von dem der Antenne 5. Befindet sich ein Transponder auf der Seite der Antenne 4, so ist das Signal dieser Antenne (das jeweils erste Signal) stets größer als das Signal von Antenne 5. Auf der Seite der Antenne 5 ist dann dementsprechend das Signal dieser Antenne stärker. Der Transponder 2 sendet auf einer HF-Strecke das Ergebnis dieser Seitenerfassung an die Steuer- und Auswerteelektronikeinheit 3 zurück, wozu diese zusätzlich mit einem HF-Empfangsteil 3' versehen ist.

Da die beiden Antennen 4 und 5 in relativ geringem Abstand zueinander angeordnet sind - der Abstand liegt typischerweise zwischen dem Radius und dem Durchmesser der Spulen - wirken feldverzerrende Umgebungseinflüsse, z.B. durch metallische Gegenstände, auf beide Antennen 4, 5 in etwa gleicher Weise, so dass die elektromagnetischen Felder beider Antennen im gleichen Maße verändert werden. In dieser Hinsicht sind hier deshalb keine zusätzlichen Ausgleichsmaßnahmen erforderlich. Um einen Ausgleich auch weiterer Fehlereinflüsse wie z.B. ein unterschiedliches Driften der beiden Sender kompensieren zu können, ist innerhalb der Spulenfläche der zweiten Antenne 5 eine Abgleichspule 6 angeordnet, mit der die Feldstärke der beiden Antennen 4 und 5 gemessen und somit bei bekanntem Abstand der Antennen 4 und 5 deren Feldstärken auf den gleichen Wert geregelt werden können. Falls der Abstand der beiden Antennen 4 und 5 nicht genau festliegt, z.B. um unterschiedliche Einbaubedingungen berücksichtigen zu können, so ist auch innerhalb der Spulenfläche der ersten Antenne 4 eine Abgleichspule 6 vorzusehen.

Durch den Einsatz von zumindest drei Sendern kann diese "Links-Rechts"-Erkennung zu einer universellen Richtungserkennung erweitert werden. Durch den relativen Modulationshub, welcher mit der Entfernung abnimmt und von der Feldstärke der beiden Sender unabhängig ist, kann die Entfernung ermittelt werden. Die wesentlichen Vorteile der erfindungsgemäßen Einrichtung sowie des zugehörigen Verfahrens liegen zum einen in der höheren Geschwindigkeit, da ein einmaliger Sendevorgang ausreicht, um die Position des Transponders zu bestimmen, zum anderen erlaubt der geringe Abstand zwischen den Antennen einen sehr kompakten Aufbau der gesamten Einrichtung, so dass der Installationsaufwand gegenüber bisherigen Systemen deutlich verringert ist. Zudem ist die Positionsauflösung besser als bei bisherigen Systemen.

## Patentansprüche

1. Einrichtung zur Positionsbestimmung eines mobilen Transponders (2), mit einem ortsfesten, zumindest zwei zur Abstrahlung jeweils eines Sendesignals vorgebbarer Stärke mittels dazu geeigneter Antennen (4, 5) vorgesehene Sender sowie eine Steuer- und Auswerteelektronikeinheit (3) mit Mitteln zum wechselweisen Betrieb der Sender umfassenden Basissystem (1), und einem zur Kommunikation mit dem Basissystem (1) vorgesehenen, mit Mitteln zur Erfassung eines Feldstärkedifferenzsignals versehen Transponder (2), **dadurch gekennzeichnet, dass** die Antennen (4, 5) der Sender als Luftspulen mit etwa gleich großen Antennenflächen ausgebildet sind, die mit ihren Spulenflächen parallel zueinander ausgerichtet angeordnet sind, wobei ihr Abstand zueinander größer als der Spulenradius und geringer als der Spulendurchmesser ist.

2. Einrichtung nach Anspruch 1, **dadurch gekennzeichnet, dass** es sich bei den von den Sendern abgestrahlten Sendesignalen um niederfrequente elektromagnetische Felder handelt.

3. Einrichtung nach Anspruch 1 oder 2, **dadurch gekennzeichnet, dass** innerhalb der Spulenfläche zumindest einer Antenne (4, 5) eine Abgleichspule (6) zum Messen der Feldstärke angeordnet ist.

4. Einrichtung nach einem der Ansprüche 1 bis 3, **dadurch gekennzeichnet, dass** der Transponder (2) einen HF-Sender und die Basiseinheit (1) eine HF-Empfangseinrichtung (3') zur Rückkommunikation umfassen.

5. Verfahren zur Positionsbestimmung eines mobilen Transponders (2) mit einer Einrichtung gemäß einem der Ansprüche 1 bis 4, **dadurch gekennzeichnet, dass** die Sender wechselweise jeweils ein- und ausgeschaltet werden, um über ihre Antennen (4, 5) jeweils ein Signal gleicher Stärke am jeweiligen Antennenort abzustrahlen, wobei in festgelegten Zeitabständen eine Sendepause erfolgt, nach der stets mit der Aussendung des Signals eines festgelegten der beiden Sender begonnen wird.

6. Verfahren nach Anspruch 5, **dadurch gekennzeichnet, dass** das Ergebnis der Positionsbestimmung über eine HF-Strecke an die Basisstation (1) zurückgesendet wird.

## Claims

1. Facility for determining the position of a mobile transponder (2), having one stationary base system (1) comprising at least two transmitters, each provided for emitting a transmit signal of specifiable strength by means of aerials (4, 5) appropriate for this purpose and having a control and analysis electronic unit (3) with means for alternately operating the transmitters, and having a transponder (2) intended for communicating with the base system (1) and provided with means for detecting a field intensity differential signal, **characterised in that** the aerials (4, 5) of the transmitters are designed as air-core coils with aerial surfaces of approximately equal size which are arranged with their coil surfaces aligned parallel to each other and with the distance from each other being larger than the radius of the coil and smaller than the diameter of the coil.

2. Facility in accordance with Claim 1, **characterised in that** the transmit signals emitted by the transmitters are low-frequency electromagnetic fields.

3. Facility in accordance with Claim 1 or Claim 2, **characterised in that** an alignment coil (6) is located within the coil surface of at least one aerial (4, 5) for the purpose of measuring the field strength.

4. Facility in accordance with any of Claims 1 to 3, **characterised in that** the transponder (2) comprises an HF transmitter and the base unit (1) comprises an HF receiver device (3') for backward communication purposes.

5. Process for determining the position of a mobile transponder (2) using a facility in accordance with any of Claims 1 to 4, **characterised in that** the transmitters can be switched on and off alternately in order for each of them to emit a signal of the same strength at each aerial location by way of their aerials (4, 5), for which purpose an intermission takes place at predetermined intervals, subsequent to which emission of the signal always commences with a specific one of the two transmitters.

6. Process in accordance with Claim 5, **characterised in that** the result of the position determination is sent back to the base station (1) by way of an HF channel.

## Revendications

1. Dispositif pour déterminer la position d'un transpondeur mobile (2), avec un système de base (1) stationnaire, comprenant au moins deux émetteurs, qui sont prévus pour diffuser chacun, au moyen d'antennes (4, 5) appropriées, un signal d'émission d'une intensité pouvant être prédéfinie, ainsi qu'une unité électronique de commande et d'évaluation (3) avec des moyens pour l'exploitation alternative des émetteurs, et avec un transpondeur (2) prévu pour la communication avec le système de base (1) et pourvu de moyens de détection d'un signal de différence d'intensité de champ, **caractérisé en ce que** les antennes (4, 5) des émetteurs sont conçues en tant que bobines à air, qui sont distancées les unes des autres d'un intervalle supérieur à un rayon de bobine et inférieur à un diamètre de bobine.

2. Dispositif selon la revendication 1, **caractérisé en ce que** les signaux d'émission, émis par les émetteurs sont des champs électromagnétiques à basse fréquence.

3. Dispositif selon revendication 1 ou 2, **caractérisé en ce que,** pour mesurer l'intensité de champ, une bobine de compensation (6) est disposée dans la surface d'enroulement d'au moins une antenne (4, 5).

4. Dispositif selon l'une des revendications 1 à 3, **caractérisé en ce que** le transpondeur (2) comprend un émetteur HF et que l'unité de base (1) comprend un dispositif de réception HF (3') pour la communication en retour.

5. Procédé de détermination de position d'un transpondeur mobile (2), avec un dispositif selon l'une des revendications 1 à 4, **caractérisé en ce que** les émetteurs sont respectivement connectés et déconnectés alternativement pour émettre respectivement un signal de même intensité par l'intermédiaire de leurs antennes (4, 5), depuis la position de celles-ci, une pause d'émission ayant lieu à des intervalles de temps fixés, pause après laquelle commence toujours l'émission du signal de celui des deux émetteurs qui est déterminé.

6. Procédé selon la revendication 5, **caractérisé en ce que** le résultat de la détermination de position est renvoyée à la station de base (1) par l'intermédiaire d'une liaison HF.
